# EUROPÄISCHE PATENTANMELDUNG

(11) **EP 4 844 951 A1**
(43) Veröffentlichungstag der Anmeldung: **25.11.2026**
(21) Anmeldenummer: 26157773.8
(22) Anmeldetag: 11.02.2026
(51) Int. Cl.: H01R 4/48, H01H 1/00, H01H 1/42, H01H 71/08, H01R 9/24, H01R 9/26, H01R 31/08, H02B 1/20, H02B 11/04

(54) **REIHENKLEMMENANORDNUNG**

(30) Priorität: 24.02.2025 DE 102025106868
(71) Anmelder: Phoenix Contact GmbH & Co. KG, 32825 Blomberg (DE)
(72) Erfinder: SCHLOO, Torsten, 32760 Detmold (DE); HOEMANN, Norbert, 33034 Brakel (DE); KLOPPENBURG, Christian, 33142 Büren Wewelsburg (DE)

(57) **Zusammenfassung**

Dargestellt und beschrieben ist eine Reihenklemmenanordnung (1) mit einer Trennklemme (2), einer Durchgangsklemme (3) und einem Brückenelement (4), wobei das Brückenelement (4) einen Verbindungsabschnitt (41) und zwei mit dem Verbindungsabschnitt (41) elektrisch verbundene Kontaktabschnitte (42, 43) aufweist, wobei die Trennklemme (2) ein Klemmengehäuse (21), eine aus zwei Teilstücken (221, 222) bestehende Stromschiene (22), zwei Leiteranschlusselemente (23) zum Anschließen von je einem Leiter an ein Teilstück (221, 222) der Stromschiene (22) und ein Schaltelement (24) aufweist, wobei das Schaltelement (24) zwischen einer ersten Schaltstellung, in der die beiden Teilstücke (221, 222) der Stromschiene (22) miteinander verbunden sind, und einer zweiten Schaltstellung, in der die beiden Teilstücke (221, 222) der Stromschiene (22) voneinander getrennt sind, schaltbar ist, wobei die Durchgangsklemme (3) ein Klemmengehäuse (31), eine Stromschiene (32) und zwei Leiteranschlusselemente (33) zum Anschließen von je einem Leiter an ein Ende der Stromschiene (32) aufweist, und wobei zumindest im Klemmengehäuse (31) der Durchgangsklemme (3) mindestens ein Funktionsschacht (34) und in der Stromschiene (32) der Durchgangsklemme (3) mindestens eine korrespondierende Anschlussmöglichkeit (35) für einen ersten Kontaktabschnitt (42) des Brückenelements () ausgebildet ist.

Bei der erfindungsgemäßen Reihenklemmenanordnung (1) kann dadurch auf einfache Art und Weise zwischen der Trennklemme (2) und der Durchgangsklemme (2) ein Kurzschluss hergestellt werden, dass der zweite Kontaktabschnitt (43) des Brückenelements (4) dazu ausgebildet ist, das Schaltelement (24) der Trennklemme (2) elektrisch zu kontaktieren, wenn sich das Schaltelement (24) in seiner zweiten Schaltstellung befindet.

## Beschreibung

Die Erfindung betrifft eine Reihenklemmenanordnung mit mindestens einer Trennklemme, mindestens einer Durchgangsklemme und mindestens einem Brückenelement nach dem Oberbegriff des Patentanspruchs 1.

Darüber hinaus betrifft die Erfindung ein Brückenelement zur Realisierung eines Kurzschlusses zwischen mindestens einer Trennklemme und mindestens einer Durchgangsklemme einer Reihenklemmenanordnung, wobei das Brückenelement einen Verbindungsabschnitt und mindestens zwei mit dem Verbindungsabschnitt elektrisch verbundene Kontaktabschnitte aufweist.

Elektrische Reihenklemmen sind seit Jahrzehnten bekannt und werden millionenfach bei der Verdrahtung elektrischer Anlagen und Geräte verwendet. Die Reihenklemmen werden meist auf Tragschienen aufgerastet, die ihrerseits in einer Mehrzahl in einem Schaltschrank angeordnet sein können. Der Grundtyp der Reihenklemme ist die Durchgangsklemme, die ein Klemmengehäuse mit mindestens zwei Leiteranschlusselementen aufweist, die über eine elektrisch leitende Verbindungsschiene, die Stromschiene, elektrisch miteinander verbunden sind. Neben diesem Grundtyp, der teilweise auch als Verbindungsklemme bezeichnet wird, gibt es eine Vielzahl von weiteren Reihenklemmentypen, die speziell an den jeweiligen Anwendungsfall angepasst sind.

Insbesondere bei Reihenklemmen die in Stromwandler-Messkreisen der Energieerzeugung, -übertragung und -verteilung oder in verfahrenstechnischen Anlagen eingesetzt werden, sind häufig verschiedene Schalt-, Trenn- und Prüfaufgaben zu realisieren. Hierfür werden speziell ausgebildete Reihenklemmen eingesetzt, die als Trennklemmen oder entsprechend ihrer Verwendung als Messwandler-Trennklemmen bezeichnet werden.

Bei Trennklemmen besteht die Stromschiene aus zwei Teilstücken, wobei über die Leiteranschlusselemente je einem Leiter an ein Teilstück der Stromschiene angeschlossen werden kann. Außerdem weisen Trennklemmen ein Schaltelement auf, das zwischen einer ersten Schaltstellung, in der die beiden Teilstücke der Stromschiene miteinander verbunden sind, und einer zweiten Schaltstellung, in der die beiden Teilstücke der Stromschiene voneinander getrennt sind, schaltbar ist. Die beiden Teilstücke der Stromschiene, und damit auch die an den jeweiligen Leiteranschlusselementen angeschlossenen Leiter, können so über das Schaltelement wahlweise miteinander verbunden oder voneinander getrennt werden, so dass ein angeschlossene Strom- oder Signalkreis geöffnet oder geschlossen werden kann. Zur Durchführung der verschiedenen Schalt-, Trenn- und Prüfaufgaben steht für derartige Trennklemmen verschiedenes Zubehör, wie Prüfadapter, Steckbrücken oder Schaltbrücken zur Verfügung, das im Klemmengehäuse der Trennklemme befestigt und mit der Stromschiene elektrisch leitend verbunden werden kann.

Die DE 10 2022 134 279 A1 offenbart eine Reihenklemmenanordnung mit mindestens zwei nebeneinander angeordneten Trennklemmen. Bei dieser Reihenklemmenanordnung können die Schaltelemente von zwei benachbarten Trennklemmen dadurch auf für einen Nutzer komfortabel zu handhabende Weise miteinander gekoppelt werden, dass eine Kopplungseinrichtung vorgesehen ist, die mechanisch mit den Schaltelementen gekoppelt werden kann. Die Kopplungseinrichtung weist einen fest mit dem ersten Schaltelement verbundenen Abschnitt und ein Eingriffselement auf, das formschlüssig in eine Eingriffsöffnung des zweiten Schaltelements eingreifen kann. Das Eingriffselement kann dabei wahlweise auch außer Eingriff mit der Eingriffsöffnung gebracht werden, ohne dass die Kopplungseinrichtung insgesamt von den beiden Trennklemmen gelöst werden muss, so dass im Bedarfsfall die beiden Schaltelemente auch unabhängig voneinander geschaltet werden können.

Aus der DE 10 2008 014 177 A1 ist eine eingangs genannte Reihenklemmenanordnung bekannt. Neben einer Anordnung von mehreren, nebeneinander auf einer Tragschiene angeordneten Trennklemmen offenbart diese Druckschrift auch eine Durchgangsklemme sowie das zuvor beschriebene Zubehör wie Prüfadapter, Steckbrücken und Schaltbrücken. Damit die Reihenklemmen eine Vielzahl von Kombinationen des Schalt- und Prüfzubehörs ermöglichen, sind im Klemmengehäuse der Trennklemmen und der Durchgangsklemme auf beiden Anschlussseiten jeweils drei Funktionsschächte ausgebildet. Außerdem sind in den beiden Teilstücken der Stromschiene bzw. in der Stromschiene auf beiden Anschlussseiten korrespondierend zu den drei Funktionsschächten drei Anschlussmöglichkeit für das Zubehör ausgebildet. Durch die Ausbildung eines dritten Funktionsschachtes sowie einer dritten Anschlussmöglichkeit in der Stromschiene sind auch bei gesteckter Prüfsteckerbuchse noch verschiedene Brückungen möglich, da auf beiden Anschlussseiten noch jeweils zwei Funktionsschächte für feste Brücken oder für Schaltbrücken zur Verfügung stehen.

Mit Hilfe der Steckbrücken kann auf einfache Art und Weise eine Potentialverteilung zwischen benachbarten Reihenklemmen realisiert werden. Die Schaltbrücken dienen dazu, zwei benachbarte Trennklemmen bei Bedarf elektrisch miteinander zu verbinden, so dass beispielsweise die Möglichkeit besteht, einen angeschlossenen Stromwandler kurzzuschließen. Derartige Trennklemmen bzw. Reihenklemmenanordnungen haben sich in der Praxis bewährt und werden daher umfangreich eingesetzt. Ein Nachteil der bekannten Schaltbrücken besteht jedoch darin, dass sie relativ große Abmessungen aufweisen, so dass sie zum einen deutlich weiter aus einem Funktionsschacht herausragen als beispielsweise Steckbrücken. Zum anderen ragen sie auch senkrecht zur Anreihrichtung der Trennklemmen, d. h. senkrecht zur Längsrichtung einer Tragschiene, auf der die Trennklemmen aufgerastet sind, über den Funktionsschacht, in den sie eingesteckt sind, hinaus, wodurch ein benachbarter Funktionsschacht verdeckt werden kann.

Der vorliegenden Erfindung liegt daher die Aufgabe zugrunde, eine eingangs beschriebene Reihenklemmenanordnung mit mindestens einer Trennklemme, mindestens einer Durchgangsklemme und mindestens einem Brückenelement sowie ein entsprechendes Brückenelement weiterzuentwickeln, so dass auf einfache Art und Weise zwischen mindestens einer Trennklemme und mindestens einer Durchgangsklemme einer Reihenklemmenanordnung ein Kurzschluss hergestellt werden kann. Die Abmessungen der Reihenklemmenanordnung bzw. des Brückenelements sollen dabei möglichst gering sein.

Diese Aufgabe ist bei der eingangs beschriebenen Reihenklemmenanordnung mit den Merkmalen des Patentanspruchs 1 gelöst. Das mindestens eine Brückenelement der Reihenklemmenanordnung weist einen Verbindungsabschnitt und mindestens zwei mit dem Verbindungsabschnitt elektrisch verbundene Kontaktabschnitte auf. Erfindungsgemäß ist dabei mindestens ein zweiter Kontaktabschnitt des Brückenelements dazu ausgebildet, das Schaltelement der mindestens einen Trennklemme elektrisch zu kontaktieren, wenn sich das Schaltelement in seiner zweiten Schaltstellung befindet, so dass zwischen der mindestens einen Trennklemme und der mindestens einen Durchgangsklemme ein Kurzschluss realisiert ist.

Eingangs ist ausgeführt, dass die Reihenklemmenanordnung mindestens eine Trennklemme, mindestens eine Durchgangsklemme und mindestens ein Brückenelement aufweist. Weist die Reihenklemmenanordnung genau eine Trennklemme und eine Durchgangsklemme auf, so ist auch nur ein Brückenelement vorgesehen, dass dann zwei Kontaktabschnitte aufweist, die über den Verbindungsabschnitt miteinander elektrisch leitend verbunden sind. Weist die Reihenklemmenanordnung mehr als eine Trennklemme oder mehr als eine Durchgangsklemme auf, so können auch mehrere Brückenelemente vorgesehen sein. Alternativ kann auch ein Brückenelement vorgesehen sein, dass mehr als zwei Kontaktabschnitte aufweist. Ebenso ist es jedoch auch möglich, dass bei einer Reihenklemmenanordnung mit mehr als einer Trennklemme oder mehr als einer Durchgangsklemme nur ein Brückenelement vorgesehen ist, das gleichwohl nur zwei Kontaktabschnitte aufweist, so dass über das Brückenelement ein Kurzschluss nur zwischen einer Trennklemme und einer Durchgangsklemme realisiert werden kann, wenn sich das Schaltelement der entsprechenden Trennklemme in seiner zweiten Schaltstellung befindet.

Bei der nachfolgenden Beschreibung der Erfindung wird zur Vereinfachung davon ausgegangen, dass die Reihenklemmenanordnung genau eine Trennklemme und auch nur eine Durchgangsklemme aufweist, ohne dass die Erfindung bzw. die beschriebenen Ausgestaltungen darauf beschränkt sind.

Bei der erfindungsgemäßen Reihenklemmenanordnung können bei Bedarf die Trennklemme und die Durchgangsklemme mittels des Brückenelements miteinander elektrisch verbunden werden. Dazu wird das Brückenelement mit seinem ersten Kontaktabschnitt mit der Stromschiene der Durchgangsklemme verbunden, indem der erste Kontaktabschnitt die Anschlussmöglichkeit der Stromschiene kontaktiert. Die elektrisch leitende Verbindung mit der Trennklemme erfolgt über den zweiten Kontaktabschnitt, der das Schaltelement der Trennklemme kontaktiert, wenn sich das Schaltelement in seiner zweiten Schaltstellung befindet.

Im Unterschied zu den bekannten Schaltbrücken wird der Kurzschluss zwischen der Trennklemme und der Durchgangsklemme nicht durch eine Betätigung der Schaltbrücke bzw. eines im Gehäuse der Schaltbrücke verschiebbar angeordneten Schienenelements, sondern durch Schalten des Schaltelements in seine zweite Position hergestellt. Dadurch kann das Betätigungselement einfach aufgebaut sein, so dass es auch nur geringe Abmessungen aufweist.

Die konkrete Ausgestaltung des zweiten Kontaktabschnitts des Brückenelements hängt insbesondere davon ab, wie das Schaltelement ausgebildet ist. Ist das Schaltelement als flaches Trennmesser ausgebildet bzw. weist das Schaltelement ein flaches Trennmesser auf, so ist der zweite Kontaktabschnitt des Brückenelements gemäß einer bevorzugten Ausgestaltung als Gabelkontakt mit zwei einander gegenüberliegenden Kontaktschenkeln ausgebildet. Das Schaltelement kann so auf einfache Art und Weise elektrisch kontaktiert werden, indem das Schaltelement zwischen die beiden Kontaktschenkeln eingeschoben wird, wenn das Schaltelement in seine zweite Schaltstellung bewegt wird.

Gemäß einer bevorzugten Ausgestaltung ist die Anschlussmöglichkeit in der Stromschiene der Durchgangsklemme als Öffnung ausgebildet, so dass der erste Kontaktabschnitt des Brückenelements zur Kontaktierung in die Öffnung eingesteckt werden kann. Der erste Kontaktabschnitt kann dazu ebenfalls als Gabelkontakt ausgebildet sind, dessen federnden Kontaktschenkel im eingesteckten Zustand mit ihren Außenflächen gegen die Innenwand der Öffnung drücken, wodurch ein sicherer elektrische und auch ein sicherer mechanischer Kontakt zwischen dem ersten Kontaktabschnitt des Brückenelements und der Stromschiene gewährleistet werden kann.

In einer alternativen Ausführungsform ist der erste Kontaktabschnitt des Brückenelements als Scherelement ausgebildet, so dass der erste Kontaktabschnitt mindestens zwei im wesentlich parallel zueinander angeordnete Kontaktschenkel aufweist, von denen wenigstens einer federnd ausgebildet ist. Auch bei dieser Ausgestaltung drücken die Kontaktschenkel mit ihren Außenflächen gegen die Innenwand der Öffnung in der Stromschiene, wodurch ein sicherer elektrischer und mechanischer Kontakt realisiert werden kann.

Ist in der Stromschiene der Durchgangsklemme eine Öffnung als Anschlussmöglichkeit für das erste Kontaktelement des Brückenelements ausgebildet, so ist die Öffnung vorzugsweise so dimensioniert, dass sie auch zur Aufnahme von anderem Zubehör wie Prüfadaptern oder Steckbrücken geeignet ist. In diesem bevorzugten Fall ist somit das erste Kontaktelement so dimensioniert, dass es in eine "normale" Öffnung in der Stromschiene eingesteckt werden kann, die auch zur Aufnahme von anderem Zubehör verwendet werden kann.

Wie bei den bekannten Trennklemmen, so ist auch bei der Trennklemme der erfindungsgemäßen Reihenklemmenanordnung das Schaltelement unter einem Winkel zu den Teilstücken der Stromschiene angeordnet. Die Haupterstreckungsrichtung des Schaltelements verläuft dabei näherungsweise senkrecht zur Haupterstreckungsrichtung der Stromschiene, wobei berücksichtigt werden muss, dass das Schaltelement vorzugsweise aus seiner ersten Schaltstellung in seine zweite Schaltstellung verschwenkt wird, so dass sich die Haupterstreckungsrichtung des Schaltelements entsprechend beim Verschwenken ändert.

Gemäß einer bevorzugten Ausgestaltung sind der erste Kontaktabschnitt des Brückenelements, der die Stromschiene der Durchgangsklemme kontaktiert, und der zweite Kontaktabschnitt, der das Schaltelement in seiner zweiten Schaltstellung kontaktiert, unter einem Winkel α zueinander angeordnet. Der Winkel α beträgt dabei vorzugsweise zwischen 60° und 100°, insbesondere zwischen 75° und 90°. Vorzugsweise sind außerdem der Verbindungsabschnitt und der erste Kontaktabschnitt des Brückenelements in einer gemeinsamen Ebene angeordnet sind. Der erste Kontaktabschnitt erstreckt sich dann in der Ebene des Verbindungsabschnitts. Der zweite Kontaktabschnitt ist dagegen vom Verbindungsabschnitt abgebogen, wobei sich der zweite Kontaktabschnitt unter einem Winkel von 180° - α zum Verbindungsabschnitt erstreckt.

Bei der erfindungsgemäßen Reihenklemmenanordnung kann das Brückenelement grundsätzlich nur an der Durchgangsklemme mechanisch befestigt sein, indem der erste Kontaktabschnitt des Brückenelements in den Funktionsschacht im Klemmengehäuse der Durchgangsklemme eingesteckt und das Ende des ersten Kontaktabschnitts mit der Anschlussmöglichkeit der Stromschiene verbunden ist, beispielsweise in eine entsprechende Öffnung in der Stromschiene eingesteckt ist. Wenn sich das Schaltelement in seiner ersten Schaltstellung befindet, ist dann keine mechanische Befestigung des Brückenelements an der Trennklemme realisiert.

Vorzugsweise weist das Brückenelement jedoch einen Befestigungsabschnitt auf, der zur mechanischen Befestigung des Brückenelements an der Trennklemme dient. Im Klemmengehäuse der Trennklemme ist dann mindestens ein Funktionsschacht und in einem Teilstück der Stromschiene der Trennklemme korrespondierend zum mindestens einen Funktionsschacht mindestens eine Aufnahme für den Befestigungsabschnitt des Brückenelements ausgebildet. Da der Befestigungsabschnitt nur der mechanischen Befestigung des Brückenelements in der Trennklemme und nicht auch der elektrischen Kontaktierung des Teilstücks der Stromschiene dienen soll, sind der Befestigungsabschnitt und/oder die Aufnahme so ausgebildet, dass der Befestigungsabschnitt das Teilstück der Stromschiene nicht elektrisch kontaktiert, wenn der Befestigungsabschnitt in der Aufnahme aufgenommen ist. Dies kann besonders einfach dadurch realisiert sein, dass der Befestigungsabschnitt aus einem nicht leitenden Material, insbesondere aus einem Kunststoff besteht, oder zumindest im Bereich der Aufnahme von einem nicht leitenden Material umgebenen ist.

Weist das Brückenelement einen Befestigungsabschnitt auf, so erstreckt sich dieser vorzugsweise parallel zum ersten Kontaktabschnitt des Brückenelements. Der Befestigungsabschnitt kann beispielsweise zwei federnde Rastarme aufweisen, wodurch der Befestigungsabschnitt sicher in der Aufnahme des Teilstücks der Stromschiene der Trennklemme eingesteckt werden kann. Der Befestigungsabschnitt bzw. die Rastarme sind dabei vorzugsweise so ausgebildet, dass das Brückenelement bei Bedarf auch wieder von der Reihenklemmenanordnung angezogen werden kann.

Bei dem eingangs beschriebenen Brückenelement ist die der Erfindung zugrundeliegende Aufgabe mit den Merkmalen des Patentanspruchs 8 gelöst. Während der erste Kontaktabschnitt des Brückenelements dazu ausgebildet ist, die Stromschiene einer Durchgangsklemme elektrisch zu kontaktieren, ist der zweite Kontaktabschnitt des Brückenelements dazu ausgebildet, das Schaltelement einer Trennklemme elektrisch zu kontaktieren, wenn sich das Schaltelement in seiner zweiten Schaltstellung befindet. Dazu sind der erste Kontaktabschnitt und der zweite Kontaktabschnitt unter einem Winkel α zueinander angeordnet, der vorzugsweise zwischen 60° und 100°, insbesondere zwischen 75° und 90° beträgt.

Wie zuvor im Zusammenhang mit der Reihenklemmenanordnung beschrieben worden ist, ist der zweite Kontaktabschnitt des Brückenelements vorzugsweise als Gabelkontakt ausgebildet, der zwei einander gegenüberliegenden Kontaktschenkeln aufweist. Außerdem weist das Brückenelement vorzugsweise einen Befestigungsabschnitt auf, der der Befestigung des Brückenelements an einer Trennklemme dient und dazu in einen Funktionsschacht im Klemmengehäuse der Trennklemme einsteckbar ist.

Vorzugsweise weist das Brückenelement außerdem ein Isoliergehäuse auf, das den Verbindungsabschnitt gegen ungewolltes Berühren abdeckt. Zumindest der Verbindungsabschnitt des Brückenelements ist somit in einem Isoliergehäuse angeordnet oder von einem Isoliergehäuse umspritzt. Das Isoliergehäuse ist dabei so ausgestaltet, dass es weder die elektrische Kontaktierung zwischen dem ersten Kontaktabschnitt und der Stromschiene der Durchgangsklemme noch die elektrische Kontaktierung zwischen dem zweiten Kontaktabschnitt und dem Schaltelement behindert. Weist das Brückenelement auch einen Befestigungsabschnitt auf, so ist dieser vorzugsweise mit dem Isoliergehäuse verbunden, insbesondere einstückig mit diesem ausgebildet.

Gemäß einer weiteren vorteilhaften Ausgestaltung ist an dem Isoliergehäuse ein Griffabschnitt ausgebildet, an dem das Brückenelement von der Durchgangsklemme und der Trennklemme angezogen werden kann. Das Isoliergehäuse und der Griffabschnitt sind dazu so ausgebildet, dass zumindest der Griffabschnitt aus dem Funktionsschacht der Trennklemme und dem Funktionsschacht der Durchgangsklemme herausragt, wenn das Brückenelement mit den beiden Klemmen verbunden ist.

Im Einzelnen gibt es mehrere Möglichkeiten, die erfindungsgemäße Reihenklemmenanordnung bzw. das erfindungsgemäße Brückenelement auszugestalten und weiterzubilden. Dazu wird sowohl auf die nachgeordneten Patentansprüche als auch auf die nachfolgende Beschreibung bevorzugter Ausführungsbeispiele in Verbindung mit der Zeichnung verwiesen. In der Zeichnung zeigen
- Fig. 1: eine perspektivische Darstellung eines Ausführungsbeispiels einer Reihenklemmenanordnung,
- Fig. 2: die Reihenklemmenanordnung gemäß Fig. 1, wobei sowohl das Klemmengehäuse der Trennklemme als auch das Klemmengehäuse der Durchgangsklemme weggelassen sind, mit dem Schaltelement in seiner ersten Schaltstellung,
- Fig. 3: die Reihenklemmenanordnung gemäß Fig. 2, mit dem Schaltelement in seiner zweiten Schaltstellung,
- Fig. 4: die Reihenklemmenanordnung gemäß Fig. 2, wobei zusätzlich das Isoliergehäuse des Brückenelements weggelassen ist,
- Fig. 5: die Reihenklemmenanordnung gemäß Fig. 4, mit dem Schaltelement in seiner zweiten Schaltstellung,
- Fig. 6: die Reihenklemmenanordnung gemäß Fig. 2, mit einem zweiten Ausführungsbeispiel eines Brückenelements, und
- Fig. 7: die Reihenklemmenanordnung gemäß Fig. 3, mit entferntem Brückenelement und zwei eingesteckten Prüfadaptern.

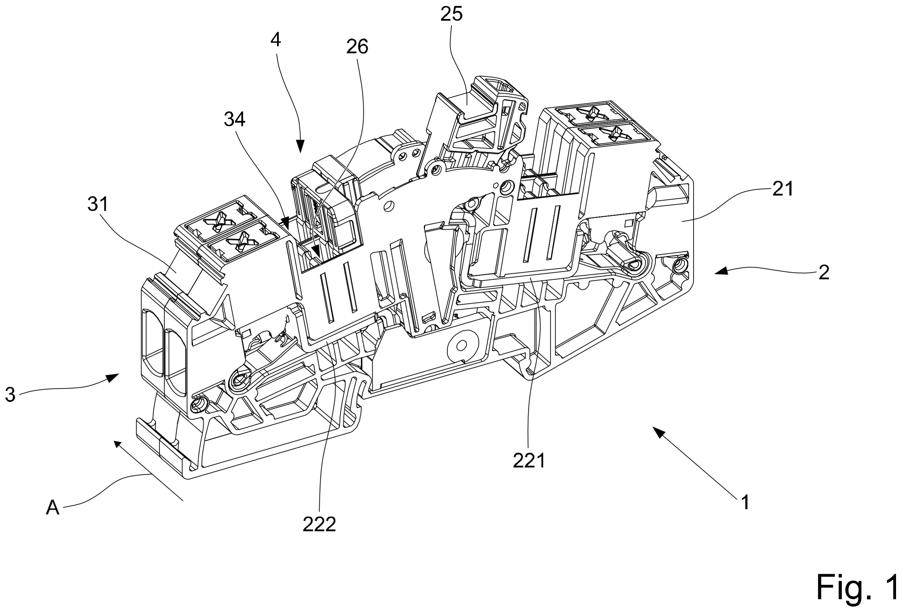

Fig. 1 zeigt eine perspektivische Darstellung eines Ausführungsbeispiels einer Reihenklemmenanordnung 1, die vorliegend eine Trennklemme 2 und eine Durchgangsklemme 3 aufweist. Die Trennklemme 2 und die Durchgangsklemme 3 sind in Anreihrichtung A nebeneinander angeordnet, wobei die Trennklemme 2 und die Durchgangsklemme 3 auf einer - hier nicht dargestellten - Tragschiene aufgerastet werden können. Die Trennklemme 2 weist ein Klemmengehäuse 21 und die Durchgangsklemme 3 ein Klemmengehäuse 31 auf, wobei die äußeren Abmessungen der beiden Klemmengehäuse 21, 31 gleich sind.

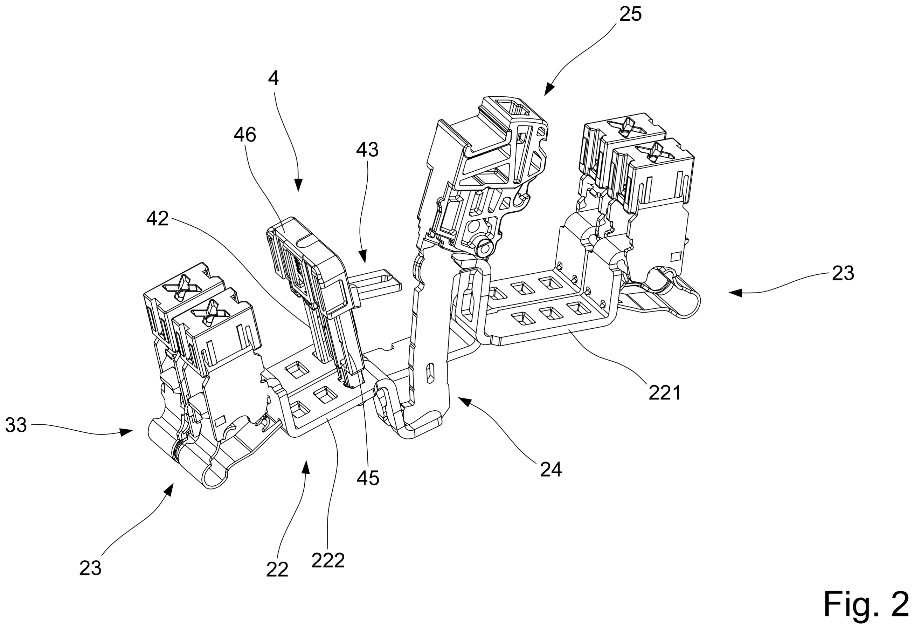

Fig. 2 zeigt dieselbe Reihenklemmenanordnung 1 wie Fig. 1, wobei jedoch zur Darstellung des inneren Aufbaus der Trennklemme 2 und der Durchgangsklemme 3 sowohl das Klemmengehäuse 21 der Trennklemme 2 als auch das Klemmengehäuse 31 der Durchgangsklemme 3 weggelassen sind. Die Trennklemme 2 weist eine Stromschiene 22 im Inneren des Klemmengehäuses 21 auf, die aus zwei Teilstücken 221, 222 besteht. Außerdem weist die Trennklemme 2 zwei Leiteranschlusselemente 23 auf, bei denen es sich im dargestellten Ausführungsbeispiel um Federkraftklemmanschlüsse handelt. Grundsätzlich können jedoch auch andere Arten von Leiteranschlusselementen verwendet werden, beispielsweise Schraubklemmen oder Zugfederklemmen. Die beiden Leiteranschlusselemente 23 dienen zum Anschluss je eines Leiters an ein Teilstück 221, 222 der Stromschiene 22.

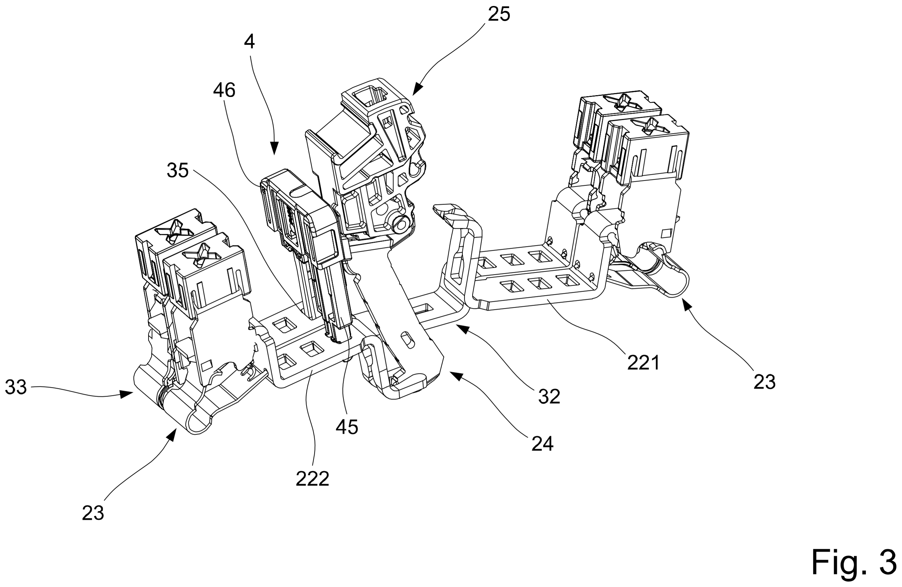

Außerdem weist die Trennklemme 2 noch ein Schaltelement 24 auf, das im dargestellten Ausführungsbeispiel als flaches Trennmesser ausgebildet ist. Das Schaltelement 24 ist zwischen einer ersten Schaltstellung (Fig. 2), in der die beiden Teilstücke 221, 222 der Stromschiene 22 über das Schaltelement 24 miteinander elektrisch verbunden sind, und einer zweiten Schaltstellung (Fig. 3), in der die beiden Teilstücke 221, 222 der Stromschiene 22 voneinander getrennt sind, schaltbar. Die beiden Teilstücke 221, 222 der Stromschiene 22, und damit auch die an den jeweiligen Leiteranschlusselementen 23 angeschlossenen Leiter, können somit über das Schaltelement 24 wahlweise miteinander verbunden oder voneinander getrennt werden, sodass ein angeschlossener Strom- oder Signalkreis geöffnet oder geschlossen werden kann. Zur Betätigung und als Berührschutz weist das Schaltelement 24 an seinem oberen, aus dem Klemmengehäuse 21 der Trennklemme 2 herausragenden Ende ein Isoliergehäuse 25 auf.

Bei der Durchgangsklemme 3 ist innerhalb des Klemmengehäuses 31 eine durchgehende Stromschiene 32 angeordnet, die an ihren beiden Enden mit zwei Leiteranschlusselementen 33 zum Anschluss von je einem Leiter an ein Ende der Stromschiene 32 zusammenwirkt. Auch bei der Durchgangsklemme 3 sind die Leiteranschlusselemente 33 im dargestellten Ausführungsbeispiel als Federkraftklemmanschlüsse ausgebildet, wobei auch hier andere Arten von Leiteranschlusselementen möglich sind.

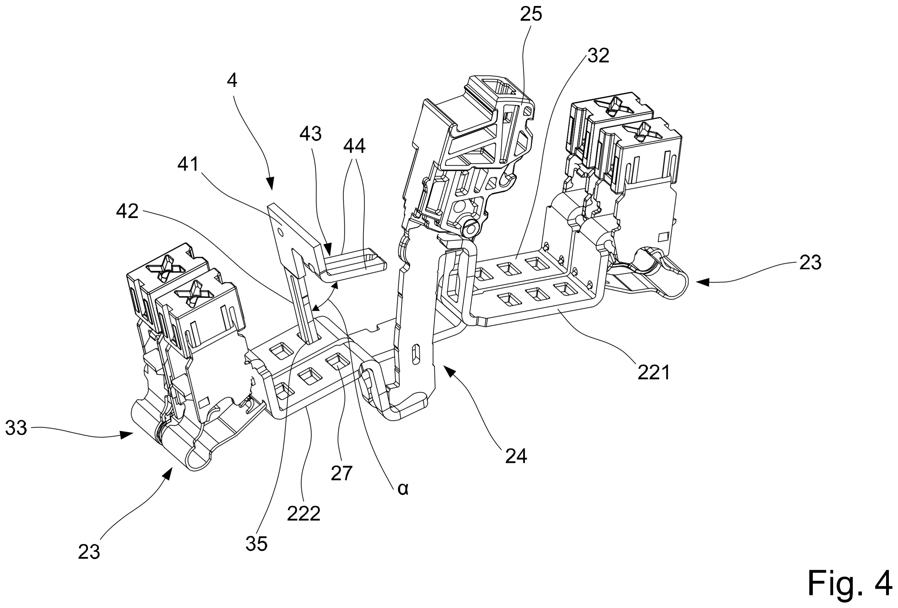

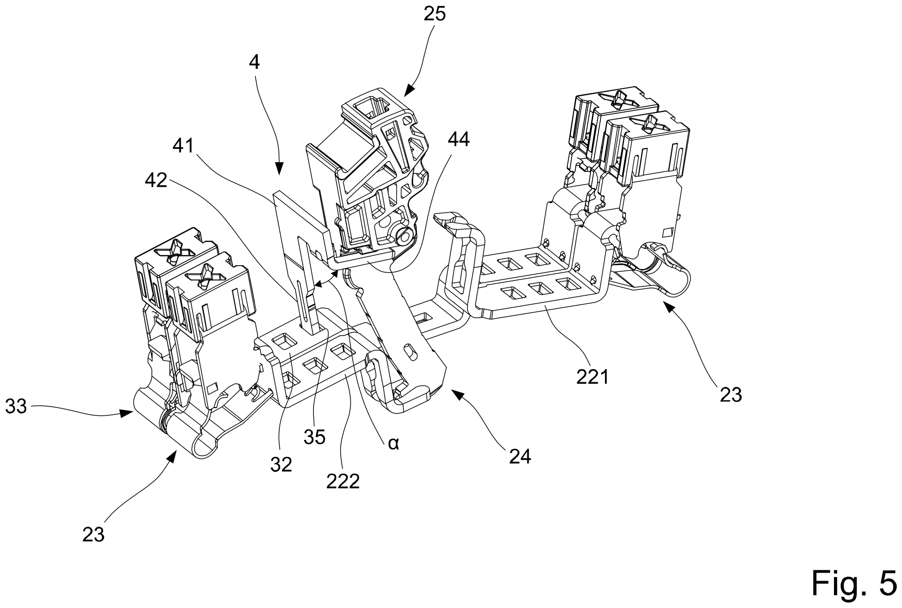

Neben der Trennklemme 2 und der Durchgangsklemme 3 weist die in den Figuren 1 bis 6 dargestellte Reihenklemmenanordnung 1 noch ein Brückenelement 4 auf, das gemäß Fig. 1 in das Klemmengehäuse 21 der Trennklemme 2 sowie das Klemmengehäuse 31 der Durchgangsklemme 3 eingesteckt ist. Die Figuren 2 und 3 zeigen das Brückenelement 4 mit Isoliergehäuse 46, während bei der Darstellung gemäß den Figuren 4 und 5 das Isoliergehäuse 46 weggelassen ist. Aus diesen Darstellungen ist ersichtlich, dass das Brückenelement 4 einen Verbindungsabschnitt 41 und zwei mit dem Verbindungsabschnitt 41 elektrisch verbundene Kontaktabschnitte 42, 43 aufweist. Der Verbindungsabschnitt 41 und die beiden Kontaktabschnitte 42, 43 sind einstückig ausgebildet und aus einem Metallteil ausgestanzt und abgebogen.

Während der erste Kontaktabschnitt 42 des Brückenelements 4 zur Kontaktierung der Stromschiene 32 der Durchgangsklemme 3 dient, ist der zweite Kontaktschenkel 43 des Brückenelements 4 nicht, jedenfalls nicht direkt, mit der Stromschiene 22 der Trennklemme 2 verbunden. Der zweite Kontaktschenkel 43 dient vielmehr zur Kontaktierung des Schaltelements 24, wenn sich dieses in seiner zweiten Schaltstellung befindet. Wie aus den Figuren 3 und 5 ersichtlich ist, ist in der zweiten Schaltstellung des Schaltelements 24 das zweite Teilstück 222 der Stromschiene 22 der Trennklemme 2 über das Brückenelement 4 elektrisch mit der Stromschiene 32 der Durchgangsklemme 3 verbunden, sodass zwischen der Trennklemme 2 und der Durchgangsklemme 3 ein Kurzschluss realisiert ist.

Wie insbesondere aus den Figuren 4 und 5 erkennbar ist, sind der erste Kontaktabschnitt 42 und der zweite Kontaktabschnitt 43 des Brückenelements 4 unter einem Winkel α zueinander angeordnet. Der Winkel α beträgt dabei etwas weniger als 90°, sodass der zweite Kontaktabschnitt 43 näherungsweise senkrecht zur Längserstreckung des Schaltelements 24 ausgerichtet ist, wenn sich das Schaltelement 24 in seiner zweiten Schaltstellung befindet. Damit das Schaltelement 24 beim Verschwenken aus seiner ersten Schaltstellung (Fig. 4) in seine zweite Schaltstellung (Fig. 5) einfach und sicher vom zweiten Kontaktabschnitt 43 kontaktiert werden kann, ist der zweite Kontaktabschnitt 43 als Gabelkontakt ausgebildet. Das Schaltelement 24 ist dann in seiner zweiten Schaltstellung zwischen den beiden einander gegenüberliegenden Kontaktschenkeln 44 des Gabelkontakts angeordnet, wodurch eine sichere Kontaktierung des Schaltelements 24 gewährleistet werden kann.

Aus den Figuren 3 - 5 ist darüber hinaus erkennbar, dass die Anschlussmöglichkeit 35 in der Stromschiene 32 der Durchgangsklemme 3 als Öffnung ausgebildet ist, in die das freie Ende des ersten Kontaktabschnitts 42 des Brückenelements 4 eingesteckt ist. Der erste Kontaktabschnitt 42 des Brückenelements 4 kann dabei ebenfalls als Gabelkontakt ausgebildet sein. Außerdem ist erkennbar, dass sowohl in der Stromschiene 32 der Durchgangsklemme 3 als auch in den beiden Teilstücken 221, 222 der Stromschiene 22 der Trennklemme 2 auf beiden Anschlussseiten jeweils drei Öffnungen ausgebildet sind, die alle dieselben Abmessungen aufweisen, sodass in diese Öffnungen auch anderes Zubehör wie Prüfadapter oder Steckbrücken eingesteckt werden können.

Der Verbindungsabschnitt 41 und die beiden Kontaktabschnitte 42, 43 des Brückenelements 4 sind aus einem flachen Metallstück ausgestanzt und abgebogen. Der erste Kontaktabschnitt 42 und der Verbindungsabschnitt 41 verlaufen dabei in einer gemeinsamen Ebene, während der zweite Kontaktabschnitt 43 vom Verbindungsabschnitt 41 abgebogen ist. Damit das Brückenelement 4 nicht nur dadurch an der Trennklemme 2 und der Durchgangsklemme 3 befestigt ist, dass der erste Kontaktabschnitt 42 in den Funktionsschacht 34 des Klemmengehäuses 31 und das Ende des ersten Kontaktabschnitts 42 in der als Öffnung ausgebildeten Anschlussmöglichkeit 35 in der Stromschiene 32 eingesteckt ist, weist das Brückenelement 4 zusätzlich einen Befestigungsabschnitt 45 auf.

Wie insbesondere aus den Figuren 1 und 4 erkennbar ist, ist dazu im Klemmengehäuse 21 der Trennklemme 2 ein entsprechender Funktionsschacht 26 und im zweiten Teilstück 222 der Stromschiene 22 eine als Öffnung ausgebildete Aufnahme 27 ausgebildet, in die der Befestigungsabschnitt 45 des Brückenelements 4 eingesteckt werden kann. Der Befestigungsabschnitt 45 dient dabei nur der mechanischen Befestigung des Brückenelements 4 an der Trennklemme 2, sodass der Befestigungsabschnitt 45 aus einem nicht leitenden Material, insbesondere einem Kunststoff, besteht. Würde der Befestigungsabschnitt 45 aus einem elektrisch leitenden Material bestehen, so wäre unabhängig von der Schaltstellung des Schaltelements 24 dauerhaft ein Kurzschluss zwischen dem zweiten Teilstück 222 der Stromschiene 22 der Trennklemme 2 und der Stromschiene 32 der Durchgangsklemme 3 realisiert, was nicht gewünscht ist. Der Befestigungsabschnitt 45 erstreckt sich dabei parallel zum ersten Kontaktabschnitt 42 des Brückenelements 4, sodass diese einfach in die ebenfalls parallel zueinander verlaufenden Funktionsschächte 26, 34 der Trennklemme 2 bzw. der Durchgangsklemme 3 eingesteckt werden kann.

Um ein ungewolltes Berühren des elektrisch leitenden Verbindungsabschnitts 41 des Brückenelements 4 zu verhindern, weist das Brückenelement 4 ein Isoliergehäuse 46 auf, das den Verbindungsabschnitt 41 umgibt. Da sowohl der erste Kontaktabschnitt 42 als auch der zweite Kontaktabschnitt 43 aus dem Isoliergehäuse 46 herausragen, wird durch das Isoliergehäuse 46 weder die elektrische Kontaktierung der Stromschiene 32 durch den ersten Kontaktabschnitt 42 noch die elektrische Kontaktierung des Schaltelements 24 durch den zweiten Kontaktabschnitt 43 behindert. Wie aus den Figuren 2 und 3 darüber hinaus ersichtlich ist, sind das Isoliergehäuse 46 und der Befestigungsabschnitt 45 miteinander verbunden, insbesondere einstückig ausgebildet.

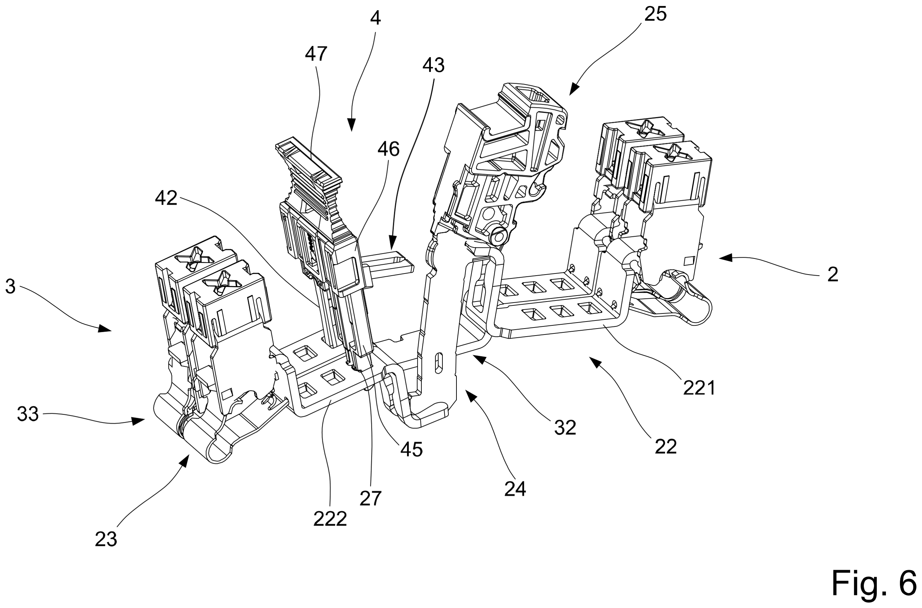

Fig. 6 zeigt eine Reihenklemmenanordnung 1 ähnlich der Reihenklemmenanordnung 1 gemäß Fig. 4, bei dem sich das Schaltelement 24 somit ebenfalls in seiner ersten Schaltposition befindet. Außerdem sind auch bei der Darstellung gemäß Fig. 6 sowohl das Klemmengehäuse 21 der Trennklemme 2 als auch das Klemmengehäuse 31 der Durchgangsklemme 3 weggelassen. Fig. 6 zeigt ein zweites Ausführungsbeispiel eines Brückenelements **4,** bei dem an dem Isoliergehäuse 46 zusätzlich ein Griffstück 47 angeordnet bzw. ausgebildet ist. Die Ausbildung des Griffstücks 47 erleichtert dabei sowohl das Einstecken als auch insbesondere das Herausziehen des Brückenelements 4 aus den Funktionsschächten 26, 34 der beiden nebeneinander angeordneten Klemmen 2, 3. Der Griffabschnitt 47 ist dazu so dimensioniert, dass er nicht nur aus den Funktionsschächten 26, 34 der Trennklemme 2 und der Durchgangsklemme 3 herausragt, sondern auch über die entsprechende Oberseite der Trennklemme 2 und der Durchgangsklemme 3 hinausragt.

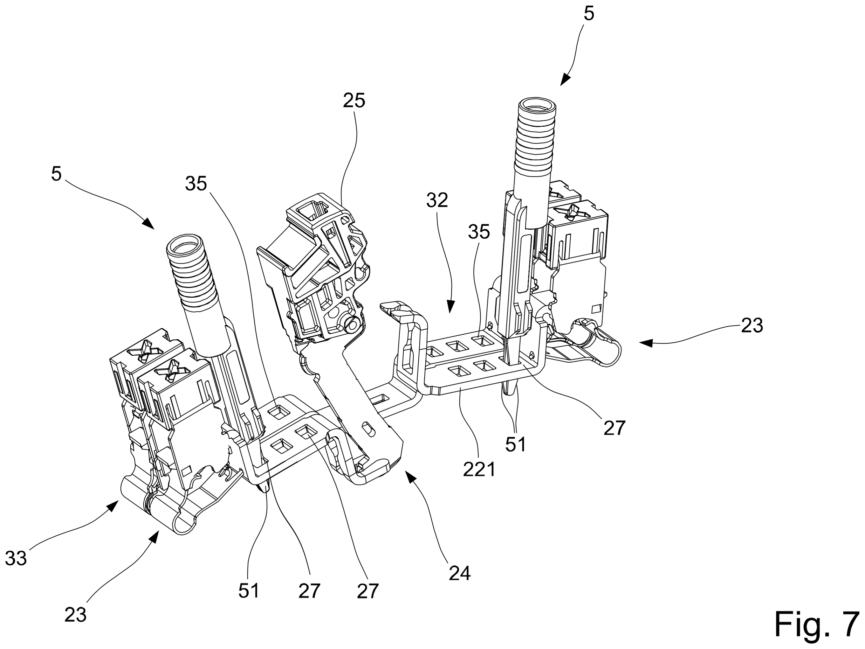

Fig. 7 zeigt schließlich eine Reihenklemmenanordnung 1, bei der sich vergleichbar mit der Darstellung gemäß Fig. 3 das Schaltelement 24 in seiner zweiten Schaltstellung befindet. Auch bei dieser Darstellung sind sowohl das Klemmengehäuse 21 der Trennklemme 2 als auch das Klemmengehäuse 31 der Durchgangsklemme 3 weggelassen. Im Unterschied zu der Darstellung gemäß Fig. 3 ist dabei jedoch das Brückenelement 4 aus der Reihenklemmenanordnung 1 entfernt. Dafür ist in den beide Teilstücken 221, 222 der Stromschiene 22 der Trennklemme 2 jeweils ein Prüfadapter 5 in den entsprechenden Aufnahmen 27 eingesteckt. Der Prüfadapter 5 weist zwei federnde Kontaktschenkel 51 auf, durch die im eingesteckten Zustand die Innenwandung der Aufnahme 27 elektrisch kontaktiert wird. Erkennbar ist hierbei auch, dass die einzelnen Aufnahmen 27 in der Stromschiene 22 bzw. die einzelnen Öffnungen 35 in der Stromschiene 32 dieselben Abmessungen aufweisen, so dass entsprechendes Prüfzubehör wahlweise in unterschiedliche Aufnahmen 27 bzw. Öffnungen 35 eingesteckt werden können.

Über die in Fig. 7 dargestellten Prüfadapter 5 kann beispielsweise ein Amperemeter zur Vergleichsmessung an die Trennklemme 2 angeschlossen werden. Hierzu muss sich das Schaltelement 24 in seiner zweiten Schaltstellung befinden, damit die beiden Teilstücke 221, 222 der Stromschiene 22 nicht miteinander verbunden sind. Außerdem darf kein elektrischer Kurzschluss zur benachbarten Durchgangsklemme 3 realisiert sein, wozu das Brückenelement 4 aus der Anordnung entfernt sein muss.

### Bezugszeichen

- 1.: Reihenklemmenanordnung
- 2.: Trennklemme
- 21.: Klemmengehäuse
- 22.: Stromschiene
- 221.: erste Teilstück
- 222.: zweite Teilstück
- 23.: Leiteranschlusselemente
- 24.: Schaltelement
- 25.: Isoliergehäuse
- 26.: Funktionsschacht
- 27.: Aufnahme
- 3.: Durchgangsklemme
- 31.: Klemmengehäuse
- 32.: Stromschiene
- 33.: Leiteranschlusselemente
- 34.: Funktionsschacht
- 35.: Anschlussmöglichkeit (Öffnung)
- 4.: Brückenelement
- 41.: Verbindungsabschnitt
- 42.: erster Kontaktabschnitt
- 43.: zweiter Kontaktabschnitt
- 44.: Kontaktschenkel
- 45.: Befestigungsabschnitt
- 46.: Isoliergehäuse
- 47.: Griffabschnitt
- 5.: Prüfadapter
- 51.: Kontaktschenkel

## Patentansprüche

1. Reihenklemmenanordnung (1) mit mindestens einer Trennklemme (2), mindestens einer Durchgangsklemme (3) und mindestens einem Brückenelement (4),
wobei das Brückenelement (4) einen Verbindungsabschnitt (41) und mindestens zwei mit dem Verbindungsabschnitt (41) elektrisch verbundene Kontaktabschnitte (42, 43) aufweist,
wobei die mindestens eine Trennklemme (2) ein Klemmengehäuse (21), eine aus zwei Teilstücken (221, 222) bestehende Stromschiene (22), mindestens zwei Leiteranschlusselemente (23) zum Anschließen von je einem Leiter an ein Teilstück (221, 222) der Stromschiene (22) und ein Schaltelement (24) aufweist, wobei das Schaltelement (24) zwischen einer ersten Schaltstellung, in der die beiden Teilstücke (221, 222) der Stromschiene (22) miteinander verbunden sind, und einer zweiten Schaltstellung, in der die beiden Teilstücke (221, 222) der Stromschiene (22) voneinander getrennt sind, schaltbar ist,
wobei die mindestens eine Durchgangsklemme (3) ein Klemmengehäuse (31), eine Stromschiene (32) und mindestens zwei Leiteranschlusselemente (33) zum Anschließen von je einem Leiter an ein Ende der Stromschiene (32) aufweist,
wobei zumindest im Klemmengehäuse (31) der Durchgangsklemme (3) mindestens ein Funktionsschacht (34) und in der Stromschiene (32) der Durchgangsklemme (3) korrespondierend zum mindestens einen Funktionsschacht (34) mindestens eine Anschlussmöglichkeit (35) für einen ersten Kontaktabschnitt (42) des Brückenelements (4) ausgebildet ist,
**dadurch gekennzeichnet,**
**dass** mindestens ein zweiter Kontaktabschnitt (43) des Brückenelements (4) dazu ausgebildet ist, das Schaltelement (24) der mindestens einen Trennklemme (2) elektrisch zu kontaktieren, wenn sich das Schaltelement (24) in seiner zweiten Schaltstellung befindet, so dass zwischen der mindestens einen Trennklemme (2) und der mindestens einen Durchgangsklemme (3) ein Kurzschluss realisiert ist.

2. Reihenklemmenanordnung (1) nach Anspruch 1, **dadurch gekennzeichnet, dass** der zweite Kontaktabschnitt (43) des Brückenelements (4) als Gabelkontakt mit zwei einander gegenüberliegenden Kontaktschenkeln (44) ausgebildet ist, wobei das Schaltelement (24) zwischen den beiden Kontaktschenkeln (44) angeordnet ist, wenn sich das Schaltelement (24) in seiner zweiten Schaltstellung befindet.

3. Reihenklemmenanordnung (1) nach Anspruch 1 oder 2, **dadurch gekennzeichnet, dass** der erste Kontaktabschnitt (42) und der zweite Kontaktabschnitt (43) unter einem Winkel α zueinander angeordnet sind.

4. Reihenklemmenanordnung (1) nach Anspruch 3, **dadurch gekennzeichnet, dass** der Verbindungsabschnitt (41) und der erste Kontaktabschnitt (42) des Brückenelements (4) in einer gemeinsamen Ebene angeordnet sind.

5. Reihenklemmenanordnung (1) nach einem der Ansprüche 1 bis 4, **dadurch gekennzeichnet, dass** das Brückenelement (4) mindestens einen Befestigungsabschnitt (45) aufweist, und dass im Klemmengehäuse (21) der Trennklemme (2) mindestens ein Funktionsschacht (26) und in einem Teilstücken (222) der Stromschiene (22) der Trennklemme (2) korrespondierend zum mindestens einen Funktionsschacht (26) mindestens eine Aufnahme (27) für den mindestens einen Befestigungsabschnitt (45) des Brückenelements (4) ausgebildet ist, wobei der Befestigungsabschnitt (45) und/oder die Aufnahme (27) so ausgebildet sind, dass der Befestigungsabschnitt (45) das Teilstück (222) der Stromschiene (22) der Trennklemme (2) nicht elektrisch kontaktiert, wenn der Befestigungsabschnitt (45) in der Aufnahme (27) aufgenommen ist.

6. Reihenklemmenanordnung (1) nach einem der Ansprüche 1 bis 5, **dadurch gekennzeichnet, dass** das Brückenelement (4) ein Isoliergehäuse (46) aufweist, das den Verbindungsabschnitt (41) gegen ungewolltes Berühren abdeckt.

7. Reihenklemmenanordnung (1) nach Anspruch 6, **dadurch gekennzeichnet, dass** an dem Isoliergehäuse (46) ein Griffabschnitt (47) ausgebildet ist, wobei zumindest der Griffabschnitt (47) aus dem Funktionsschacht (26) der Trennklemme (2) und dem Funktionsschacht (34) der Durchgangsklemme (3) herausragt, wenn das Brückenelement (4) montiert ist.

8. Brückenelement (4) zur Realisierung eines Kurzschlusses zwischen mindestens einer Trennklemme (2) und mindestens einer Durchgangsklemme (3) einer Reihenklemmenanordnung (1) nach einem der Ansprüche 1 bis 7, mit einen Verbindungsabschnitt (41) und mindestens zwei mit dem Verbindungsabschnitt (41) elektrisch verbundenen Kontaktabschnitte (42, 43),
**dadurch gekennzeichnet,**
**dass** der erste Kontaktabschnitt (42) und der zweite Kontaktabschnitt (43) unter einem Winkel α zueinander angeordnet sind, wobei der mindestens eine erste Kontaktabschnitt (42) des Brückenelements (4) dazu ausgebildet ist, die Stromschiene (22) der Durchgangsklemme (3) zu kontaktieren und der mindestens eine zweite Kontaktabschnitt (43) des Brückenelements (4) dazu ausgebildet ist, das Schaltelement (24) der mindestens einen Trennklemme (2) elektrisch zu kontaktieren, wenn sich das Schaltelement (24) in seiner zweiten Schaltstellung befindet.

9. Brückenelement (4) nach Anspruch 8, **dadurch gekennzeichnet, dass** der zweite Kontaktabschnitt (43) des Brückenelements (4) als Gabelkontakt mit zwei einander gegenüberliegenden Kontaktschenkeln (44) ausgebildet ist.

10. Brückenelement (4) nach Anspruch 8 oder 9, **dadurch gekennzeichnet, dass** der Verbindungsabschnitt (41) zumindest teilweise in einem Isoliergehäuse (45) angeordnet ist, sodass der Verbindungsabschnitt (41) gegen ungewolltes Berühren abdeckt ist.

11. Brückenelement (4) nach Anspruch 10, **dadurch gekennzeichnet, dass** das Isoliergehäuse (46) mit mindestens einen Befestigungsabschnitt (45) verbunden ist, der in einen Funktionsschacht (26) im Klemmengehäuse (21) der Trennklemme (2) einsteckbar ist.

12. Brückenelement (4) nach Anspruch 11, **dadurch gekennzeichnet, dass** an dem Isoliergehäuse (46) ein Griffabschnitt (47) ausgebildet ist.
